# EUROPEAN PATENT SPECIFICATION

(11) **EP 3 627 392 B1**
(45) Date of publication and mention of the grant of the patent: **11.09.2024**
(21) Application number: 19789249.0
(22) Date of filing: 12.04.2019
(51) Int. Cl.: G06V 20/00, G06V 10/764, G06V 10/82

(54) **OBJECT IDENTIFICATION METHOD, SYSTEM AND DEVICE, AND STORAGE MEDIUM**
VERFAHREN, SYSTEM UND VORRICHTUNG ZUR OBJEKTIDENTIFIKATION UND SPEICHERMEDIUM
PROCÉDÉ, SYSTÈME ET DISPOSITIF D'IDENTIFICATION D'OBJET, ET SUPPORT D'INFORMATIONS

(30) Priority: 16.04.2018 CN 201810346438
(43) Date of publication of application: 25.03.2020
(73) Proprietor: Turing AI Institute (Nanjing) Co., Ltd., Nanjing, Jiangsu 210046 (CN)
(72) Inventor: TANG, Pingzhong, Nanjing, Jiangsu 210046 (CN); LI, Yuanqi, Nanjing, Jiangsu 210046 (CN); WANG, Xun, Nanjing, Jiangsu 210046 (CN); QI, Jingchen, Nanjing, Jiangsu 210046 (CN)
(74) Representative: Weickmann & Weickmann PartmbB
(86) International application number: PCT/CN2019/082575
(87) International publication number: WO 2019/201187

(56) References cited:
- WO-A1-2016/077934
- CN-A- 101 853 364
- CN-A- 105 139 516
- CN-A- 107 463 962
- CN-A- 107 895 144
- CN-A- 108 520 285
- US-A1- 2017 032 285
- US-A1- 2017 238 056
- ASHLESH SHARMA ET AL: "The Fake vs Real Goods Problem", KNOWLEDGE DISCOVERY AND DATA MINING, ACM, 2 PENN PLAZA, SUITE 701NEW YORKNY10121-0701USA, 13 August 2017 (2017-08-13), pages 2011 - 2019, XP058370772, ISBN: 978-1-4503-4887-4, DOI: 10.1145/3097983.3098186

## Description

### Field of the Invention

The present application relates to the field of machine learning technology, in particular to an item authentication method, system, device and storage medium.

### Background of the Invention

Nowadays, the purchasing power of residents has enhanced and the purchase amount of luxuries has increased. However, the phenomenon of mixed sales of genuine and fake luxuries occurs endlessly, and the authentication for luxuries has become a core requirement for consumers who purchase luxuries through multiple channels. At present, a main method for authenticating luxuries at home and abroad involves manual authentication, and there are no papers or patents for authenticating luxuries through a deep learning method.

Although developments have been made in manual authentication for luxuries, there are still many problems. First, currently in China, there is no professional qualification certificate for the industry of luxury authentication, and basic requirements on the knowledge, skills and abilities necessary for practitioners are lacked while there are no formal training methods to practitioners, so that it is hard to guarantee the professional quality of practitioners. Second, the cost of cultivating one for luxury authentication is high, and there are a few persons who meet the requirements, thus it is difficult to meet the increasing market requirement. Moreover, the authentication for luxury goods is time-sensitive and requires a large amount of knowledge. Whereas a person's understanding of genuine or fake item is very subjective, and different people may make different judgments according to their own knowledge, experience, emotion, etc., so it is difficult to ensure the accuracy of an authentication result. Third, the artificial luxury authentication industry has a big profit margin, and it is easy to form a black interest chain, which is difficult to gain trust of consumers. Compared with the time-consuming and laborious solutions such as authenticating items via physical store or sending items to a platform for authentication, or the like, the way to get an authentication result based on images is more in line with people's usage habits today.

Deep learning is an algorithm for representation learning of data in machine learning. It is derived from research on artificial neural networks, with the motivation of establishing a neural network that simulates the human brain for analytical learning and interprets image, sound and text data by simulating the mechanism of the human brain. In deep learning, low-level features are combined to form more abstract high-level representing attribute categories or features to discover distributed feature representations of data. In 2006, Hinton et al. proposed an unsupervised greedy layer-wise training algorithm based on a Deep Belief Network (DBN), which started a new wave of deep learning in academia and industry. At present, deep learning has become a representative machine learning technology, and is widely used in the fields of images, sounds, text and the like.

Therefore, it is a technical problem to be solved how to authenticate luxury goods through the deep learning technology to improve the accuracy of authentication and reduce the authentication cost.

ASHLESH SHARMA ET AL: "The Fake vs. Real Goods Problem", KNOWLEDGE DISCOVERY AND DATA MINING, ACM, 2 PENN PLAZA, SUITE 701NEW YORKNY10121-0701USA, 13 August 2017 (2017-08-13), pages 2011-2019, XP058370772, DOI: 10.1145/3097983.3098186, ISBN: 978-1-4503-4887-4, discloses a new mechanism that uses machine learning algorithms on microscopic images of physical objects to distinguish between genuine and counterfeit versions of the same product. The underlying principle of the system stems from the idea that microscopic characteristics in a genuine product or a class of products (corresponding to the same larger product line), exhibit inherent similarities that can be used to distinguish these products from their corresponding counterfeit versions. Further relevant prior art comprises US2017/032285A1 and WO2016/077934A1.

### Summary of the Invention

In view of the above-mentioned shortcomings in the prior art, the present application provides an item authentication method, system, device and storage medium, for solving the problem in the prior art that the authenticity of an item cannot be determined quickly.

To achieve the above and other related objects, a first aspect of the present application provides an item authentication method according to claim 1.

In some embodiments of the first aspect, the item authentication method further comprises a step of pre-processing the plurality of images.

In some embodiments of the first aspect, the step of pre-processing the plurality of images comprises performing one or more of size modification, scaling, noise addition, inversion, rotation, translation, scaling transformation, cropping, contrast transformation, and random channel offset on the images.

In some embodiments of the first aspect, the item authentication method further comprises a step of clustering the content of at least one of the images.

In some embodiments of the first aspect, the step of clustering the content of at least one of the images comprises performing a feature approximation degree clustering on the content of at least one of the images by a VGG19 network feature classification model to determine training models for the plurality of images, wherein, the feature approximation degree clustering refers to performing a cluster operation based on feature approximation degree.

In some embodiments of the first aspect, the plurality of trained convolutional neural network models corresponding to each target authentication point comprise at least two network models of a VGG19 network model, an RESNET54 network model and a WRESNET16 network model.

In some embodiments of the first aspect, the step of acquiring a single-point score corresponding to each of a plurality of target authentication points through identifying the plurality of images by a plurality of trained convolutional neural network models respectively further comprises: storing extracted features and output results of the plurality of convolutional neural network models corresponding to the at least one target authentication point; and acquiring the single-point score corresponding to each target authentication point through stitching the features extracted by the plurality of convolutional neural network models and classifying the stitched features based on a decision tree algorithm, wherein, a manner of stitching the features comprises performing a stitch operation on the features each of which is represented by matric.

In some embodiments of the first aspect, the step of authenticating the authenticity of the item according to the single-point scores and the total score comprises: presetting a first threshold and a second threshold; outputting an authentication result of fake which indicates the item is fake when the single-point scores are determined to be less than the first threshold; and outputting an authentication result of fake which indicates the item is fake when the total score is determined to be less than the second threshold if the single-point scores are determined to be larger than the first threshold.

In some embodiments of the first aspect, the item authentication method further comprises a step of preventing overfitting.

In some embodiments of the first aspect, the item is a luxury.

A second aspect of the present application provides an item authentication system according to claim 6.

In some embodiments of the second aspect, the pre-processing module is further configured to pre-process the plurality of images.

In some embodiments of the second aspect, the pre-processing module performs one or more of size modification, scaling, noise addition, inversion, rotation, translation, scaling transformation, cropping, contrast transformation, and random channel offset on the images.

In some embodiments of the second aspect, the pre-processing module is further configured to cluster the content of at least one of the images.

In some embodiments of the second aspect, the pre-processing module performs a feature approximation degree clustering on the content of at least one of the images by a VGG19 network feature classification model to determine training models for the plurality of images, wherein, the feature approximation degree clustering refers to performing a cluster operation based on feature approximation degree.

In some embodiments of the second aspect, the plurality of trained convolutional neural network models corresponding to each target authentication point comprise at least two network models of a VGG19 network model, an RESNET54 network model and a WRESNET16 network model.

In some embodiments of the second aspect, the identification module is configured to perfrom steps of: storing extracted features and output results of the plurality of convolutional neural network models corresponding to the at least one target authentication point; and acquiring the single-point score corresponding to each target authentication point through stitching the features extracted by the plurality of convolutional neural network models and classifying the stitched features based on a decision tree algorithm, wherein, a manner of stitching the features comprises performing a stitch operation on the features each of which is represented by matric.

In some embodiments of the second aspect, the assessment module is configured to perform steps of: presetting a first threshold and a second threshold; outputting an authentication result of fake which indicates the item is fake when the single-point scores are determined to be less than the first threshold; and outputting an authentication result of fake which indicates the item is fake when the total score is determined to be less than the second threshold if the single-point scores are determined to be larger than the first threshold.

In some embodiments of the second aspect, the system further comprises a training module configured to train each convolutional neural network model, wherein the training module performs a step of preventing overfitting.

In some embodiments of the second aspect, the item is a luxury.

A third aspect of the present application provides an item authentication device according to claim 11.

An embodiment provides a computer readable storage medium, configured to store a computer program used for authenticating an item, and the item authentication method mentioned in the first aspect is performed when the computer program is executed.

As described above, in the item authentication method, system, device and storage medium provided by the present application, through the technical solution of identifying target authentication points used to describing the item in the images by convolutional neural networks, constructing an assessment mechanism, and determining the authenticity of the item through assessing identification results, the problem that counterfeit goods are not be quickly authenticated can be solved effectively, and disputes regarding item authenticity existed in electronic transactions or other remote shopping modes can be simplified greatly.

### BRIEF DESCRIPTION OF THE DRAWINGS

Fig. 1 shows a flow diagram of the item authentication method of the present application in an embodiment.
Figs. 2-5 show a plurality of images containing the target authentication points of a bag which is the item to be authenticated.
Fig. 6 shows a schematic diagram of the item authentication system of the present application in an embodiment.
Fig. 7 shows a structure schematic diagram of the item authentication device of the present application in an embodiment.

### DETAILED DESCRIPTION OF THE EMBODIMENTS

Implementations of the present application will be described below through specific embodiments, and those skilled in the art can easily understand other advantages and effects of the present application from the contents disclosed in the present specification.

In some examples, the terms first, second and the like are used herein for describing various elements or parameters, but the elements or parameters should not be limited by the terms. The terms are only used for distinguishing one element or parameter from another element or parameter. For example, a first preset threshold may be referred to as a second preset threshold, and similarly, a second preset threshold may be referred to as a first preset threshold, without departing from the scope of the various described embodiments. The first preset threshold and the second preset threshold are each used to describe a preset threshold, but they are not the same preset threshold unless otherwise specified in the context. Similar situations include a first volume and a second volume.

Moreover, as used herein, such single forms as "one", "a" and "the" aim at also including the plural forms, unless contrarily indicted in the text. It should be further understood that, such terms as "comprise" and "include" indicate the existence of the features, steps, operations, elements, components, items, types and/or groups, but do not exclude the existence, emergence or addition of one or more other features, steps, operations, elements, components, items, types and/or groups. The terms "or" and "and/or" used herein are explained to be inclusive, or indicate any one or any combination. Therefore, "A, B or C" or "A, B and/or C" indicates "any of the following: A; B; C; A and B; A and C; B and C; A, B and C". Exceptions of the definition only exist when the combinations of elements, functions, steps or operations are mutually exclusive inherently in some ways.

The increasing development of electronic transaction platforms not only enriches the sales channels of items, but also provides sales platforms convenient for counterfeit items, which makes the consumers have to worry about the authenticity of items they purchased. However, the ability of items authentication is not easy for ordinary consumers to develop. Additionally, as item sales platforms, it is not easy for electronic trading platforms to review the authenticity of items. For some fashionable luxuries, such as bags, watches and the like, a person for authenticating item needs to have a lot of knowledge related to items, and be familiar with materials used in the items, work processes and theme characteristics of the items, and so on. Therefore, a manual authentication method cannot satisfy the requirements of accuracy and timeliness of the items authentication for users who purchase high-end items.

In view of this, the present application provides an item authentication method. The item authentication method is performed by an item authentication system. The item authentication system is implemented by software and hardware in a computer device.

The computer device may be any computing device having mathematical and logical operations, data processing capabilities, including but not limited to: a personal computer device, a single server, a server cluster, a distributed server, a cloud server, and the like. The cloud server includes a public cloud server and a private cloud server, where the public cloud server or the private cloud server includes Software-as-a-Service(SaaS for short), Platform-as-a-Service(PaaS for short) and Infrastructure-as-a-Service(IaaS for short). The private cloud server is, for example, an Alibaba Cloud computing service platform, an Amazon cloud computing service platform, a Baidu cloud computing platform, a Tencent cloud computing platform, and the like.

The cloud server provides at least one remote picture uploading service. The remote picture uploading service includes but is not limited to at least one of: an item put-on-sale service, an item authentication service, and an item complaint service. The item put-on-sale service is, for example, a merchant uploads a picture and related text description of an item for sale, etc.; the item authentication service is, for example, a purchaser uploads a picture of an item to determine the authenticity of the item, etc.; and the item complaint service is, for example, a purchaser uploads a picture of an item for mediation by a third party (such as an electronic transaction platform) when failing to reach an agreement with a merchant.

The computer device at least includes: a memory, one or more processors, an I/O interface, a network interface and an input structure, etc.

The memory is configured to store a plurality of images of the item to be authenticated and at least one program. The memory includes a high-speed random access memory and also includes a non-volatile memory, such as one or more magnetic disk storage, flash memory, or other non-volatile solid-state storage.

In some embodiments, the memory also includes a memory away from the one or more processors, such as a network attached storage accessed via RF circuitry or an external port and a communication network, wherein the communication network is internet, one or more intranets, a local area network (LAN), a wide area network (WAN), a storage area network (SAN), etc., or a suitable combination thereof. A memory controller can control access to the memory by other components of the device such as CPU or peripheral interfaces and so on. The memory optionally includes a high-speed random access memory, and optionally also includes a non-volatile memory, such as one or more magnetic disk storage, flash memory, or other non-volatile solid state storage. Access to the memory by other components of the device such as the CPU and peripheral interfaces is optionally controlled by the memory controller.

The one or more processors are operatively coupled to a network interface to couple a computer device to the network in a communication manner. For example, the network interface can connect the computer device to a local area network (LAN), and/or a wide area network (WAN). The processor is also operatively coupled to an I/O port and an input structure, wherein the I/O port enables the computer device to interact with various other electronic devices, and the input structure enables a user to interact with the computer device. Thus, the input structure includes a button, a keyboard, a mouse, a touchpad, etc. In addition, an electronic display includes a touch component, and the touch component facilitates the user input by detecting the occurrence and/or location of touching by an object on the screen.

In another case, the item authentication system is implemented by an application (APP) loaded on a smart terminal. The smart terminal takes photographs for a plurality of images of the item to be authenticated, uploads the images to a cloud server via a wireless network, and feeds back a result after being authenticated by the cloud.

The smart terminal is a portable or wearable electronic device including but not limited to a smart phone, a tablet computer, a smart watch, smart glasses, a personal digital assistant (PDA), etc. It should be understood that in the present application, the portable electronic device as described in the embodiments is just an example, and the device can have more or fewer components than those as shown, or have different component configurations. The various components as depicted can be implemented in hardware, software, or a combination of hardware and software, including one or more signal processing and/or application specific integrated circuits.

The smart terminal includes a memory, a memory controller, one or more processors (CPU), peripheral interface, RF circuitry, audio circuitry, a speaker, a microphone, an input/output (I/O) subsystem, a touch screen, other output or control devices, and an external port. The communication among these components is through one or more communication buses or signal lines.

The smart terminal supports various applications, such as one or more of: a drawing application, a representation application, a word processing application, a website creation application, a disk editing application, a spreadsheet application, a game application, a phone application, a video conferencing application, an email application, an instant messaging application, a fitness support application, a photo management application, a digital camera application, a digital video camera application, a web browsing application, a digital music player application and/or a digital video player application.

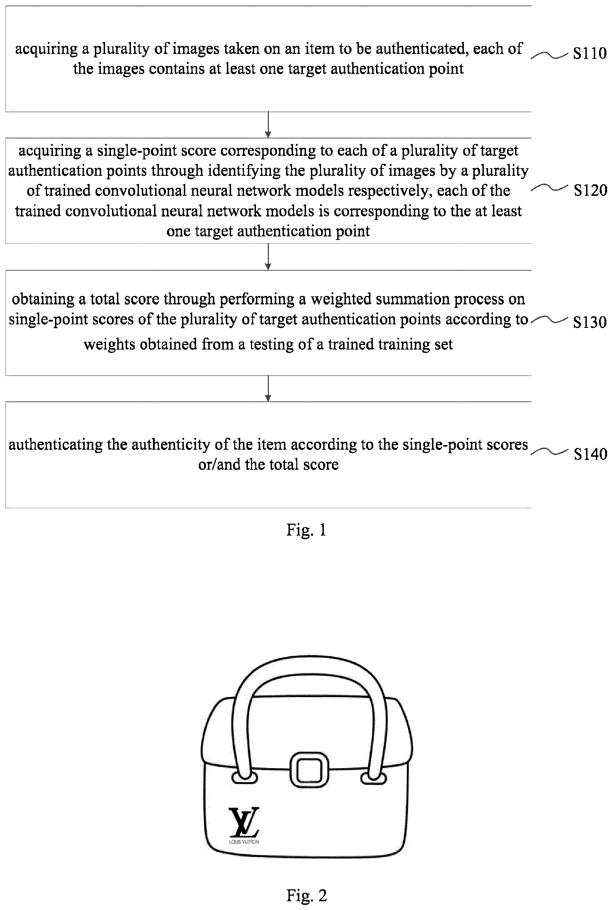

Referring to Fig. 1, which shows a flow diagram of the item authentication method of the present application in an embodiment. The one or more processors invoke at least one program and image in the memory and execute the item authentication method.

In step S110, a plurality of images taken on an item to be authenticated are acquired, each of the images contains at least one target authentication point. In an embodiment, the image is photo or picture, and the format thereof is the format in which computer stored images, such as bmp, jpg, png, tiff, gif, pcx, tga, exif, fpx, svg, psd, cdr, pcd, dxf, ufo, eps, ai, raw, WMF, etc.

Herein, the item authentication system provides an image acquisition interface, and the user provides the plurality of images of the item to be authenticated according to a prompt in the interface. In the plurality of images acquired by the item authentication system, each image includes at least one target authentication point.

In some embodiments, the item authentication system authenticates multiple types of items belonging to the same item category, for example, backpacks, travel bags, messenger bags, or the like belonging to a brand; and/or it authenticates multiple types of items belonging to different categories, for example, the types of authentication item include backpacks, travel bags, satchels, ladies' watches, men's watches, pocket watches, various cosmetics, etc. It should be noted that the authentication points of the items to be authenticated will be different due to the different items. For example, for a luxury bag, the authentication point generally includes a leather tag, a zipper and a label containing an article trademark. As another example, for a Zisha teapot, the authentication point usually includes the junction between a body and a handle or a spout thereof, or a top cover thereof, etc. In the embodiment provided in the present application, as an example, the item to be authenticated is a luxury bag.

The target authentication point includes but is not limited to at least one of an item logo part, an item accessory, an overall item shape, etc. The item logo part includes, but is not limited to, a printed mark on the item (such as an item trademark), a zipper and a zip-fastener, a joining part between a bag body and the bag strap, a watch band, a dial plate, etc.; the item accessory is, for example, a leather tag of a bag, a watch chain sample, etc.; and the overall item shape is, for example, the whole body of the item shown from at least one viewing angle. To ensure the definition of the acquired images and the number of the target authentication points, the item authentication system prompts the user to provide overall and partial images of the item from as many viewing angles as possible and performs step S120.

In some embodiments, the item authentication system screens the acquired plurality of images to obtain the image(s) conforming to at least one requirement on image definition, resolution, and target authentication point in authentication. For example, the item authentication system will remove images with a size smaller than a preset size threshold. As another example, the item authentication system performs definition analysis on the acquired images and selects images satisfying a preset definition condition. The item authentication system performs step S120 after the step of screening.

In other embodiments, to facilitate authenticating all the acquired images or images after being screened in a subsequent step, the item authentication method further includes a step of pre-processing the plurality of images. The pre-processing step is intended to match the acquired image with an image input into the neural network model to be used. The pre-processing step includes performing one or more of size modification, scaling, noise addition, inversion, rotation, translation, scaling transformation, cropping, contrast transformation, and random channel offset on the images.

For example, the item authentication system rotates the received image with 550×300 pixels into an image with 300×550 pixels. As another example, the item authentication system zooms out or crops the received image with 1000×800 pixels, and then rotates it into an image with 300×550 pixels. As another example, the item authentication system performs sharpening, noise addition and the like on the acquired beauty image to restore the real image. The item authentication system subsequently performs step S120, inputting the preprocessed images to neural network models for authentication. As another example, the item authentication system recognizes an item contour in the image, and performs rotation, translation and cropping on the image according to the position of the item image in the whole image, so as to reduce the background of the item image as much as possible and obtain the image with a size conforming to the size acceptable by the subsequent convolutional neural network. As another example, the item authentication system performs a grayscale inversion on the acquired images to facilitate the subsequent background suppression or highlighting of item features. As yet another example, before the images are input into the convolutional neural networks, the item authentication system performs random channel offset on the images according to image color or gray scale, etc., and then inputs the images into different channels of the convolutional neural networks.

In some other embodiments, the item authentication system authenticates multiple types of items belonging to the same item category, for example, backpacks, travel bags, messenger bags, or the like belonging to a brand; and/or it authenticates multiple types of items belonging to different categories, for example, the types of authentication item include backpacks, travel bags, satchels, ladies' watches, men's watches, pocket watches, various cosmetics, etc. To improve the authentication accuracy, the item authentication method further includes a step of clustering the plurality of images. Before performing the step S120, the item authentication system first clusters the acquired images according to the feature such as shape of the photographed item in the images, to classify the item to be authenticated into one of preset types. In an example, to facilitate selecting suitable images for clustering by the item authentication system, a classification prompt is provided on an image acquisition interface according to the target authentication point, so that the image uploaded by the user belongs to the corresponding type. In another example, the item authentication system selects at least one of the plurality of acquired images for clustering to determine the goods type to which the item to be authenticated belongs.

For example, the item authentication system selects, from the plurality of images, an image containing the whole body of the item to be authenticated, and then clusters the selected image to determine the goods type to which the item to be authenticated belongs. As another example, the item authentication system simultaneously clusters the plurality of acquired images, and assesses the goods types obtained by clustering each image, to determine the type to which the item to be authenticated belongs. The clustering is implemented by using a VGG19 network feature classification model. That is, the feature approximation degree clustering is performed on at least one of the images by using a VGG19 network feature classification model to determine a training model for the plurality of images. For example, the item authentication system performs feature approximation degree clustering on at least one of the acquired images by using a VGG19 network feature classification model to determine the type to which the item to be authenticated belongs, and determines the plurality of neutral network models used in step S 120 based on the determined type.

In step S120, a single-point score corresponding to each of a plurality of target authentication points is acquired through identifying the plurality of images by a plurality of trained convolutional neural network models (network models for short) respectively, each of the trained convolutional neural network models is corresponding to the at least one target authentication point.

Herein, the item authentication system sends the acquired images into different convolutional neutral network models, identifies at least one target authentication point by using each convolutional neutral network model respectively and obtains the single-point score corresponding to each identified target authentication point. The number of convolutional neutral network model used to identify the same target authentication point is more than one.

In an example, each target authentication point is corresponding to at least two preset convolutional neutral network models, and the preset convolutional neutral network models are only used for identifying the target authentication point. For example, convolutional neutral network models A1 and A2 are both used for identifying a target authentication point B1, and convolutional neutral network models A3 and A4 are both used for identifying a target authentication point B2. In another example, each target authentication point is corresponding to at least two preset convolutional neutral network models, and each preset convolutional neutral network model is used for identifying at least one target authentication point. For example, a convolutional neutral network model A5 is used for identifying a target authentication point B1, and a convolutional neutral network model A6 is used for identifying the target authentication points B1 and a target authentication point B2, and a convolutional neutral network model A7 is used for identifying the target authentication point B2.

The plurality of convolutional neural network models corresponding to the target authentication points include but are not limited to at least two network models of a VGG19 network model, an RESNET54 network model and a WRESNET16 network model.

To improve the accuracy of identifying the corresponding target authentication point by the convolutional neutral network model, the convolutional neutral network model is obtained by being trained with sample images. The sample images are obtained by photographing a genuine product, a defective product and a counterfeit product of a preset brand item and performing image processing on the photos, thereby increasing the number of sample images. For example, items are photographed from multiple viewing angles, and then an image enhancement process such as image_aug are performed on the obtained photos, thereby increasing the number of sample images. Then the convolutional neutral network models are trained by using the sample images, and structures in the network models are adjusted according to the training result. Taking an RESNET54 network model as an example, 54 residual blocks are preset, wherein the size of a convolution kernel in each block is set to 3×3, and the stride thereof is set to 1×1; the number of convolution kernels in the first 18 residual blocks is set to 16, the number of convolution kernels in the middle 18 residual blocks is set to 32, and the number of convolution kernels in the last 18 residual blocks is set to 64; besides, the RESNET residual blocks also includes a convolutional layer, with a convolution kernel of 3×3 and a stride of 2×2; and each residual block merges three parts as an output identification result. The RESNET54 network model is trained according to the above-mentioned parameter settings, and the parameters in the RESNET54 network model are obtained by using a backpropagation algorithm.

During training of each network model, a step of preventing overfitting is also included. For example, the overfitting is prevented by providing a dropout layer, setting weight decay and using early stopping in each network model. Providing a dropout layer is intended to ignore some nodes with a certain probability while optimizing the network, so that the structure of the final network model is regarded as the integration of many networks; in addition, weight decay is used to adjust the influence of model complexity on a loss function; and early stopping is used to terminate the network training early when a training error is not reduced after several epochs.

In addition, at least one network model includes a normalization layer to improve the model capacity. For example, for the type of the item to be authenticated, a network layer in the network model for authenticating a target authentication point in the corresponding type performs batch normalization.

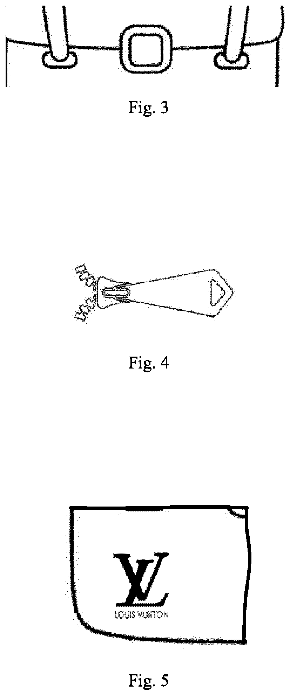

Result of the target authentication point identified by each convolutional neutral network model is used for describing the probability that an input image contains a single target authentication point. For example, the probability that an image contains a corresponding target authentication point is described according to a preset rating. Referring to Figs. 2-5, which show a plurality of images containing target authentication points of a bag which is the item to be authenticated, the target authentication points contained in the acquired plurality of images include an overall shape, a zipper and a zip-fastener, a trademark and a leather tag, and each target authentication point is identified by three convolutional neutral network models separately, so three single-point scores output by three convolutional neutral network models are obtained for each target authentication point. After the single-point scores are obtained, step S140 is performed, or steps S130 and S140 are performed as shown in Fig. 1.

In some embodiments, the result output by each network model does not directly characterize a single-point score of the corresponding target authentication point, and the single-point score corresponding to one target authentication point is obtained after the item authentication system makes a further decision on the identification results of a same target authentication point. To this end, step S120 further includes steps of: storing extracted features and output results of the plurality of convolutional neural network models corresponding to the at least one target authentication point; and acquiring the single-point score corresponding to each target authentication point through stitching the features extracted by the plurality of convolutional neural network models and classifying the stitched features based on a decision tree algorithm.

Herein, the item authentication system extracts information output from hidden layer of each network model as feature for storing. For example, fully connected layer in the hidden layer of each network model outputs the obtained data as feature to the item authentication system. The item authentication system stitches each feature provided by each network model used to identify the same target authentication point. For example, the item authentication system stitches three features, i.e. three matrices, corresponding to the same target authentication point. The stitched feature is then input to a decision tree algorithm to obtain a single-point score corresponding to the target authentication point. The decision tree algorithm is an XGBoost algorithm, for example.

In step S130, a total score is obtained through performing a weighted summation process on single-point scores of the plurality of target authentication points according to weights obtained from a testing of a trained training set.

During the training of the network models, a weight is set for each network model according to the accuracy of identifying the corresponding target authentication point by each network model, and when the acquired plurality of images are identified and the single-point scores are obtained according to step S120, the item authentication system, based on each weight, performs a weighted summation process on the single-point scores of the plurality of target authentication points to obtain the total score. For example, network model A1 and network model A2 corresponding to a target authentication point B1 in an item to be authenticated each has respective weight w1 and weight w2, and outputs a single-point score P1 and a single-point score P2 respectively; and network model A3 and network model A4 corresponding to a target authentication point B2 in the item to be authenticated each has respective weight w3 and weight w4, and outputs a single-point score P3 and a single-point score P4 respectively; then a total score obtained by the item authentication system is (w1×P1+w2×P2+w3×P3+w4×P4).

The single-point score of each target authentication point obtained by the decision tree algorithm is weighted summation processed based on a same weight. For example, a total score is obtained through summing the single-point score of each target authentication points directly.

In step S140, the authenticity of the item is authenticated according to the single-point scores and the total score. Herein, the item authentication system sets a plurality of authentication stages according to the single-point scores and the total score, and traverse each of the authentication stages according to a preset authentication order to obtain an authentication result indicating genuine or fake according to an authentication result of one of the authentication stages.

For example, the plurality of authentication stages include authenticating the single-point scores one by one and authenticating the total score. An authentication order is preset to authenticate each single-point score of all the target authentication points successively and then to authenticate the total score, the item authentication system presets a threshold corresponding to each authentication stage, and according to the above-mentioned authentication stage order, the item authentication system turns to the next authentication stage when the authentication result is genuine in the current authentication stage, until all the authentication stages are traversed to obtain a result of genuine; conversely, if the authentication result is fake in any authentication stage, the item is determined to be fake.

The item authentication system presets a first threshold and a second threshold; and the item authentication system outputs an authentication result of fake which indicates the item is fake when the single-point scores are determined to be less than the first threshold; and outputs an authentication result of fake which indicates the item is fake when the total score is determined to be less than the second threshold if the single-point scores are determined to be larger than the first threshold.

For example, the item to be authenticated includes two target authentication points, each target authentication point corresponds to three single-point scores, thus the item authentication system judges six single-point scores one by one; when the proportion of the single-point score less than the first threshold is larger than a preset proportion threshold, the item authentication system output an authentication result of fake which indicates the item is fake; conversely, if the item is determined to be genuine based on the single-point scores, the item authentication system determines whether the total score is less than the second threshold, and if so, the item authentication system outputs an authentication result of fake which indicates the item is fake, otherwise, the item authentication system outputs an authentication result of true which indicates the item is genuine. The proportion threshold is between [0,1].

It should be noted that, in some embodiments, there is one target authentication point corresponding to the item to be authenticated, and when there is only one target authentication point, the corresponding single-point score is the total score, and thus step S130 is simplified into comparison between the single-point score and the threshold. This implementation should be regarded as a particular example based on the technical idea of the present application.

The present application provides a method used to authenticate an item based on images, in the method, through the technical solution of identifying target authentication points used to describing the item in the images by convolutional neural networks, constructing an assessment mechanism, and determining the authenticity of the item through assessing identification results, the problem that counterfeit goods are not be quickly authenticated can be solved effectively, and disputes regarding item authenticity existed in electronic transactions or other remote shopping modes can be simplified greatly.

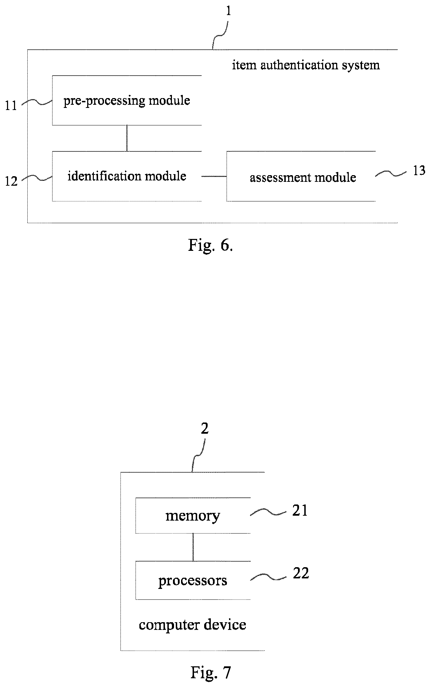

Referring to Fig. 6, which shows a block diagram of the item authentication system of the present application in an embodiment. The item authentication system 1 includes: a pre-processing module 11, an identification module 12 and an assessment module 13.

The pre-processing module 11 configured to acquire a plurality of images taken on an item to be authenticated, each of the images contains at least one target authentication point. In an embodiment, the image is photo or picture, and the format thereof is the format in which computer stored images, such as bmp, jpg, png, tiff, gif, pcx, tga, exif, fpx, svg, psd, cdr, pcd, dxf, ufo, eps, ai, raw, WMF, etc.

Herein, the pre-processing module 11 provides an image acquisition interface, and the user provides the plurality of images of the item to be authenticated according to a prompt in the interface. In the plurality of images acquired by the pre-processing module 11, each image includes at least one target authentication point.

In some embodiments, the item authentication system authenticates multiple types of items belonging to the same item category, for example, backpacks, travel bags, messenger bags, or the like belonging to a brand; and/or it authenticates multiple types of items belonging to different categories, for example, the types of authentication item include backpacks, travel bags, satchels, ladies' watches, men's watches, pocket watches, various cosmetics, etc. It should be noted that the authentication points of the items to be authenticated will be different due to the different items. For example, for a luxury bag, the authentication point generally includes a leather tag, a zipper and a label containing an article trademark. As another example, for a Zisha teapot, the authentication point usually includes the junction between a body and a handle or a spout thereof, or a top cover thereof, etc. In the embodiment provided in the present application, as an example, the item to be authenticated is a luxury bag.

The target authentication point includes but is not limited to at least one of an item logo part, an item accessory, an overall item shape, etc. The item logo part includes, but is not limited to, a printed mark on the item (such as an item trademark), a zipper and a zip-fastener, a joining part between a bag body and the bag strap, a watch band, a dial plate, etc.; the item accessory is, for example, a leather tag of a bag, a watch chain sample, etc.; and the overall item shape is, for example, the whole body of the item shown from at least one viewing angle. To ensure the definition of the acquired images and the number of the target authentication points, the pre-processing module 11 prompts the user to provide overall and partial images of the item from as many viewing angles as possible and performs the identification module 12.

In some embodiments, the pre-processing module 11 screens the acquired plurality of images to obtain the image(s) conforming to at least one requirement on image definition, resolution, and target authentication point in authentication. For example, the pre-processing module 11 will remove images with a size smaller than a preset size threshold. As another example, the pre-processing module 11 performs definition analysis on the acquired images and selects images satisfying a preset definition condition. The pre-processing module 11 performs step S120 after the step of screening.

In other embodiments, to facilitate authenticating all the acquired images or images after being screened in a subsequent step, the item authentication method further includes a step of pre-processing the plurality of images.

The pre-processing step is intended to match the acquired image with an image input into the neural network model to be used. The pre-processing step includes performing one or more of size modification, scaling, noise addition, inversion, rotation, translation, scaling transformation, cropping, contrast transformation, and random channel offset on the images. For example, the pre-processing module 11 rotates the received image with 550×300 pixels into an image with 300×550 pixels. As another example, the pre-processing module 11 zooms out or crops the received image with 1000×800 pixels, and then rotates it into an image with 300×550 pixels. As another example, the pre-processing module 11 performs sharpening, noise addition and the like on the acquired beauty image to restore the real image, the pre-processing module 11 subsequently performs step S120, inputting the preprocessed images to neural network models for authentication. As another example, the pre-processing module 11 recognizes an item contour in the image, and performs rotation, translation and cropping on the image according to the position of the item image in the whole image, so as to reduce the background of the item image as much as possible and obtain the image with a size conforming to the size acceptable by the subsequent convolutional neural network. As another example, the pre-processing module 11 performs a grayscale inversion on the acquired images to facilitate the subsequent background suppression or highlighting of item features. As yet another example, before the images are input into the convolutional neural networks, the pre-processing module 11 performs random channel offset on the images according to image color or gray scale, etc., and then inputs the images into different channels of the convolutional neural networks.

In some other embodiments, the pre-processing module 11 authenticates multiple types of items belonging to the same item category, for example, backpacks, travel bags, messenger bags, or the like belonging to a brand; and/or it authenticates multiple types of items belonging to different categories, for example, the types of authentication item include backpacks, travel bags, satchels, ladies' watches, men's watches, pocket watches, various cosmetics, etc. To improve the authentication accuracy, the item authentication method further includes a step of clustering the plurality of images.

Before performing the step S120, the pre-processing module 11 first clusters the acquired images according to the feature such as shape of the photographed item in the images, to classify the item to be authenticated into one of preset types. In an example, to facilitate selecting suitable images for clustering by the pre-processing module 11, a classification prompt is provided on an image acquisition interface according to the target authentication point, so that the image uploaded by the user belongs to the corresponding type.

In another example, the pre-processing module 11 selects at least one of the plurality of acquired images for clustering to determine the goods type to which the item to be authenticated belongs. For example, the pre-processing module 11 selects, from the plurality of images, an image containing the whole body of the item to be authenticated, and then clusters the selected image to determine the goods type to which the item to be authenticated belongs. As another example, the pre-processing module 11 simultaneously clusters the plurality of acquired images, and assesses the goods types obtained by clustering each image, to determine the type to which the item to be authenticated belongs. The clustering is implemented by using a VGG19 network feature classification model. That is, the feature approximation degree clustering is performed on at least one of the images by using a VGG19 network feature classification model to determine a training model for the plurality of images. For example, the pre-processing module 11 performs feature approximation degree clustering on at least one of the acquired images by using a VGG19 network feature classification model to determine the type to which the item to be authenticated belongs, and determines the plurality of neutral network models used by the identification module based on the determined type.

The identification module 12 is configured to identify the plurality of images by a plurality of trained convolutional neural network models respectively to acquire a single-point score corresponding to each of a plurality of target authentication points, each of the trained convolutional neural network models is corresponding to the at least one target authentication point.

Herein, the identification module 12 sends the acquired images into different convolutional neutral network models, identifies at least one target authentication point by using each convolutional neutral network model respectively and obtains the single-point score corresponding to each identified target authentication point. The number of convolutional neutral network model used to identify the same target authentication point is more than one.

In an example, each target authentication point is corresponding to at least two preset convolutional neutral network models, and the preset convolutional neutral network models are only used for identifying the target authentication point. For example, convolutional neutral network models A1 and A2 are both used for identifying a target authentication point B1, and convolutional neutral network models A3 and A4 are both used for identifying a target authentication point B2. In another example, each target authentication point is corresponding to at least two preset convolutional neutral network models, and each preset convolutional neutral network model is used for identifying at least one target authentication point. For example, a convolutional neutral network model A5 is used for identifying a target authentication point B1, and a convolutional neutral network model A6 is used for identifying the target authentication points B1 and a target authentication point B2, and a convolutional neutral network model A7 is used for identifying the target authentication point B2.

The plurality of convolutional neural network models corresponding to the target authentication points include but are not limited to at least two network models of a VGG19 network model, an RESNET54 network model and a WRESNET16 network model.

To improve the accuracy of identifying the corresponding target authentication point by the convolutional neutral network model, the convolutional neutral network model is obtained by being trained with sample images. The sample images are obtained by photographing a genuine product, a defective product and a counterfeit product of a preset brand item and performing image processing on the photos, thereby increasing the number of sample images. For example, items are photographed from multiple viewing angles, and then an image enhancement process such as image_aug are performed on the obtained photos, thereby increasing the number of sample images. Then the convolutional neutral network models are trained by using the sample images, and structures in the network models are adjusted according to the training result. Taking an RESNET54 network model as an example, 54 residual blocks are preset, wherein the size of a convolution kernel in each block is set to 3×3, and the stride thereof is set to 1×1; the number of convolution kernels in the first 18 residual blocks is set to 16, the number of convolution kernels in the middle 18 residual blocks is set to 32, and the number of convolution kernels in the last 18 residual blocks is set to 64; besides, the RESNET residual blocks also includes a convolutional layer, with a convolution kernel of 3×3 and a stride of 2×2; and each residual block merges three parts as an output identification result. The RESNET54 network model is trained according to the above-mentioned parameter settings, and the parameters in the RESNET54 network model are obtained by using a backpropagation algorithm.

During training of each network model, a step of preventing overfitting is also included. For example, the overfitting is prevented by providing a dropout layer, setting weight decay and using early stopping in each network model. Providing a dropout layer is intended to ignore some nodes with a certain probability while optimizing the network, so that the structure of the final network model is regarded as the integration of many networks; in addition, weight decay is used to adjust the influence of model complexity on a loss function; and early stopping is used to terminate the network training early when a training error is not reduced after several epochs.

In addition, at least one network model includes a normalization layer to improve the model capacity. For example, for the type of the item to be authenticated, a network layer in the network model for authenticating a target authentication point in the corresponding type performs batch normalization.

Result of the target authentication point identified by each convolutional neutral network model is used for describing the probability that an input image contains a single target authentication point. For example, the probability that an image contains a corresponding target authentication point is described according to a preset rating. Referring to Figs. 2-5, which show a plurality of images containing target authentication points of a bag which is the item to be authenticated, the target authentication points contained in the acquired plurality of images include an overall shape, a zipper and a zip-fastener, a trademark and a leather tag, and each target authentication point is identified by three convolutional neutral network models separately, so three single-point scores output by three convolutional neutral network models are obtained for each target authentication point.

In some embodiments, the result output by each network model does not directly characterize a single-point score of the corresponding target authentication point, and the single-point score corresponding to one target authentication point is obtained after the identification module 12 makes a further decision on the identification results of a same target authentication point. To this end, the identification module 12 further includes steps of: storing extracted features and output results of the plurality of convolutional neural network models corresponding to the at least one target authentication point; and acquiring the single-point score corresponding to each target authentication point through stitching the features extracted by the plurality of convolutional neural network models and classifying the stitched features based on a decision tree algorithm.

Herein, the identification module 12 extracts information output from hidden layer of each network model as feature for storing. For example, fully connected layer in the hidden layer of each network model outputs the obtained data as feature to the identification module 12. The identification module 12 stitches each feature provided by each network model used to identify the same target authentication point. For example, the identification module 12 stitches three features, i.e. three matrices, corresponding to the same target authentication point. The stitched feature is then input to a decision tree algorithm to obtain a single-point score corresponding to the target authentication point. The decision tree algorithm is an XGBoost algorithm, for example.

The assessment module 13 is configured to obtain a total score through performing a weighted summation process on single-point scores of the plurality of target authentication points according to weights obtained from a testing of a trained training set.

During the training of the network models, a weight is set for each network model according to the accuracy of identifying the corresponding target authentication point by each network model, and when the acquired plurality of images are identified and the single-point scores are obtained according to the identification module 12, the item authentication system, based on each weight, performs a weighted summation process on the single-point scores of the plurality of target authentication points to obtain the total score. For example, network model A1 and network model A2 corresponding to a target authentication point B1 in an item to be authenticated each has respective weight w1 and weight w2, and outputs a single-point score P1 and a single-point score P2 respectively; and network model A3 and network model A4 corresponding to a target authentication point B2 in the item to be authenticated each has respective weight w3 and weight w4, and outputs a single-point score P3 and a single-point score P4 respectively; then a total score obtained by the assessment module 13 is (w1×P1+w2×P2+w3×P3+w4×P4).

The single-point score of each target authentication point obtained by the decision tree algorithm is weighted summation processed based on a same weight. For example, a total score is obtained through summing the single-point score of each target authentication points directly.

The assessment module 13 is further configured to authenticate the authenticity of the item according to the single-point scores and the total score. Herein, the assessment module 13 sets a plurality of authentication stages according to the single-point scores and the total score, and traverse each of the authentication stages according to a preset authentication order to obtain an authentication result indicating genuine or fake according to an authentication result of one of the authentication stages.

For example, the plurality of authentication stages include authenticating the single-point scores one by one and authenticating the total score. An authentication order is preset to authenticate each single-point score of all the target authentication points successively and then to authenticate the total score, the assessment module 13 presets a threshold corresponding to each authentication stage, and according to the above-mentioned authentication stage order, the item authentication system turns to the next authentication stage when the authentication result is genuine in the current authentication stage, until all the authentication stages are traversed to obtain a result of genuine; conversely, if the authentication result is fake in any authentication stage, the item is determined to be fake.

The assessment module 13 presets a first threshold and a second threshold; and the item authentication system outputs an authentication result of fake which indicates the item is fake when the single-point scores are determined to be less than the first threshold; and outputs an authentication result of fake which indicates the item is fake when the total score is determined to be less than the second threshold if the single-point scores are determined to be larger than the first threshold.

For example, the item to be authenticated includes two target authentication points, each target authentication point corresponds to three single-point scores, thus the assessment module 13 judges six single-point scores one by one; when the proportion of the single-point score less than the first threshold is larger than a preset proportion threshold, the assessment module 13 output an authentication result of fake which indicates the item is fake; conversely, if the item is determined to be genuine based on the single-point scores, the assessment module 13 determines whether the total score is less than the second threshold, and if so, the assessment module 13 outputs an authentication result of fake which indicates the item is fake, otherwise, the assessment module 13 outputs an authentication result of true which indicates the item is genuine. The proportion threshold is between [0,1].

It should be noted that, in some embodiments, there is one target authentication point corresponding to the item to be authenticated, and when there is only one target authentication point, the corresponding single-point score is the total score, and thus the assessment module 13 is simplified into comparison between the single-point score and the threshold. This implementation should be regarded as a particular example based on the technical idea of the present application.

Referring to Fig. 7, which shows a structure schematic diagram of an item authentication device of the present application in an embodiment. As shown, a computer device 2 provided in the embodiment mainly includes a memory 21, one or more processors 22, and one or more programs stored in the memory 21, wherein the memory 21 stores the execution instructions, and when the computer device 2 operates, the one or more processors 22 and the memory 21 communicate with each other.

The one or more programs are stored in the memory and used for instruction execution of the one or more processors , and the one or more processors execute the execution instructions such that the electronic device performs the above-mentioned item authentication method; that is, the one or more processors 22 execute the execution instructions such that the computer device 2 performs the method as shown in Fig. 1; in this way, the authenticity of the item can be authenticated by means of image identification.

It should be understood that in various embodiments of the present application, the serial numbers of the above-mentioned processes do not mean the execution order, and the execution order of each process should be determined by its function and internal logic, and should not limit the implementation process in the embodiment of the present application.

Those skilled in the art can appreciate that the exemplary elements and algorithm steps described in combination with the embodiments herein can be implemented in electronic hardware or a combination of computer software and electronic hardware. Whether these functions are performed in hardware or software depends on the specific application and design constraints of the solution. A person skilled in the art can use different methods to implement the described functions for each specific application, but such implementation should not be considered beyond the scope of the present application.

A person skilled in the art can clearly understand that for the convenience and brevity of the description, the specific working processes of the system, the device and the unit described above can be known by referring to the corresponding process in the foregoing method embodiments, and will not be repeated herein.

In the several embodiments provided by the present application, it should be understood that the system, device, and method disclosed can be implemented in other manners. For example, the embodiments of device described above are merely illustrative. For example, the division of the units is only a logical function division, and there are other division manners in implementations. For example, multiple units or components can be combined or integrated into another system, or some features can be ignored or not executed. In addition, the mutual coupling or direct coupling or communication connection as shown or discussed can be achieved by the indirect coupling or communication connection between some interfaces, and devices or units, the connection can be in an electrical, mechanical or other form.

Units described as separate components can be or not be physically separate, and components shown as units can be or not be physical units, i.e. the components can be located in one place, and can also be distributed on multiple network units. Some or all of the units can be selected according to actual requirements to achieve the object of the solution of the present embodiments.

In addition, the functional units in the embodiments of the present application can be integrated in one processing unit, and can also be separate physically, or two or more units can be integrated in one unit.

The present application further provides a computer readable and writable storage medium, which stores a computer program for an item authentication, and when the computer program for an item authentication is executed by the processor(s), the steps of the item authentication method described above, that is, the steps in Fig. 1 are performed.

The functions can be stored in a computer readable storage medium if the functions is implemented in the form of a software functional unit and sold or used as a standalone product. Based on such understanding, the technical solutions of the present application essentially or the part contributing to the prior art or the part of the technical solution can be embodied in the form of a software product. The software product is stored in a storage medium and includes several instructions, based on which a computer device (which may be a personal computer, server, or network device, etc.) performs all or part of the steps of the methods described in various embodiments of the present application.

In the embodiments provided by the present application, the computer readable and writable storage medium includes a read only memory (ROM), a random access memory (RAM), an EEPROM, a CD-ROM or other optical disk storage device, disk storage device or other magnetic storage device, flash memory, USB flash drive, mobile hard disk, or any other mediums that can be used to store desired program code with the form of an instruction or data structure and can be accessed by a computer. In addition, any connection is properly known as a computer-readable medium. For example, if the instructions are sent from a website, server, or other remote source by using coaxial cable, fiber optic cable, twisted pair, digital subscriber line (DSL), or wireless technology such as infrared, radio, and microwave, the coaxial cable, fiber optic cable, twisted pair, DSL, or wireless technology such as infrared, radio, and microwave are included in the definition of the medium. However, it should be understood that computer readable and writable storage medium and data storage medium do not include connection, carrier wave, signal, or other transitory medium, but are intended to be directed to non-transitory, tangible storage medium. Disk and optical disk as used in the application include compact disk (CD), laser disk, optical disk, digital versatile disk (DVD), floppy disk, and Blu-ray disk, wherein, the disk typically replicates data magnetically while the optical disk replicates data optically through lasers.

As described above, in the method for authenticating an item based on images provided by the present application, through the technical solution of identifying target authentication points used to describing the item in the images by convolutional neural networks, constructing an assessment mechanism, and determining the authenticity of the item through assessing identification results, the problem that counterfeit goods are not be quickly authenticated can be solved effectively, and disputes regarding item authenticity existed in electronic transactions or other remote shopping modes can be simplified greatly.

While the above embodiments have been shown and described herein, it will be obvious to those skilled in the art that such embodiments are provided by way of example only, and are not intended to limit the application. The scope of protection is provided by the appended claims.

## Claims

1. An item authentication method, comprising the following steps:
acquiring a plurality of images taken on an item to be authenticated, each of the images contains at least one target authentication point, wherein, the target authentication point refers to an element of the item to be authenticated;
acquiring at least one single-point score corresponding to each of a plurality of target authentication points through identifying the plurality of images by a plurality of trained convolutional neural network models respectively, each of the trained convolutional neural network models is corresponding to the at least one target authentication point, and, for a given target authentication point, more than one trained convolutional neural network model is used to identify it;
**characterised in**,
obtaining a total score through performing a weighted summation process on single-point scores of the plurality of target authentication points according to weights, wherein, the weight is set for each convolutional neural network model according to the accuracy of identifying the corresponding target authentication point by the convolutional neural network model during training of the convolutional neural network model; and
authenticating the authenticity of the item through comparing the single-point scores and the total score with a first threshold and a second threshold; wherein the item authentication method outputs an authentication result of fake which indicates the item is fake when the single-point scores are determined to be less than the first threshold; and outputs an authentication result of fake which indicates the item is fake when the total score is determined to be less than the second threshold if the single-point scores are determined to be larger than the first threshold.

2. The item authentication method of Claim 1, further comprising a step of pre-processing the plurality of images, wherein, the step of pre-processing the plurality of images comprises performing one or more of size modification, scaling, noise addition, inversion, rotation, translation, scaling transformation, cropping, contrast transformation, and random channel offset on the images.

3. The item authentication method of Claim 1, wherein, the plurality of trained convolutional neural network models comprise at least two network models of a VGG19 network model, an RESNET54 network model and a WRESNET16 network model.

4. The item authentication method of Claim 1, wherein the step of authenticating the authenticity of the item according to the single-point scores and the total score comprises:
presetting a first threshold, a second threshold and a proportion threshold;
outputting an authentication result of fake which indicates the item is fake when a proportion of the single-point score less than the first threshold is determined to be larger than the proportion threshold; and
outputting an authentication result of fake which indicates the item is fake when the total score is determined to be less than the second threshold if the proportion of the single-point score less than the first threshold is determined to be less than the proportion threshold.

5. The item authentication method of Claim 1, wherein, the item is a luxury.

6. An item authentication system, comprising:
a pre-processing module, configured to acquire a plurality of images taken on an item to be authenticated, each of the images contains at least one target authentication point, wherein, the target authentication point refers to an element of the item to be authenticated;
an identification module, configured to identify the plurality of images by a plurality of trained convolutional neural network models respectively to acquire at least one single-point score corresponding to each of a plurality of target authentication points, each of the trained convolutional neural network models is corresponding to the at least one target authentication point, and, for a given target authentication point, more than one trained convolutional neural network model is used to identify it; and **characterised in**,
an assessment module, configured to obtain a total score through performing a weighted summation process on single-point scores of the plurality of target authentication points according to weights; and authenticate the authenticity of the item through comparing the single-point scores and the total score with a first threshold and a second threshold; wherein the item authentication system outputs an authentication result of fake which indicates the item is fake when the single-point scores are determined to be less than the first threshold; and outputs an authentication result of fake which indicates the item is fake when the total score is determined to be less than the second threshold if the single-point scores are determined to be larger than the first threshold, wherein, the weight is set for each convolutional neural network model according to the accuracy of identifying the corresponding target authentication point by the convolutional neural network model during training of the convolutional neural network model.

7. The item authentication system of Claim 6, wherein the pre-processing module is further configured to pre-process the plurality of images, wherein, the pre-processing module performs one or more of size modification, scaling, noise addition, inversion, rotation, translation, scaling transformation, cropping, contrast transformation, and random channel offset on the images.

8. The item authentication system of Claim 6, wherein the plurality of trained convolutional neural network models comprise at least two network models of a VGG19 network model, an RESNET54 network model and a WRESNET16 network model.

9. The item authentication system of Claim 6, wherein the assessment module is configured to perform steps of:
presetting a first threshold, a second threshold and a proportion threshold;
outputting an authentication result of fake which indicates the item is fake when a proportion of the single-point score less than the first threshold is determined to be larger than the proportion threshold; and
outputting an authentication result of fake which indicates the item is fake when the total score is determined to be less than the second threshold if the proportion of the single-point score less than the first threshold is determined to be less than the proportion threshold.

10. The item authentication system of Claim 6, wherein, the item is a luxury.

11. An item authentication device, comprising:
a memory, configured to store program codes; and
one or more processors;
wherein the processor is configured to invoke the program codes stored in the memory to execute the item authentication method of any of claims 1-5.

## Patentansprüche

1. Gegenstandauthentifizierungsverfahren, welches die folgenden Schritte aufweist:
Erfassen einer Mehrzahl von Bildern, die von einem zu authentisierenden Gegenstand aufgenommen sind, wobei jedes der Bilder zumindest einen Ziel-Authentifizierungspunkt enthält, wobei sich der Ziel-Authentifizierungspunkt auf ein Element des zu authentisierenden Gegenstands bezieht;
Erfassen von zumindest einer Einzelpunkt-Punktzahl entsprechend jedem einer Mehrzahl von Ziel-Authentifizierungspunkten, durch Identifizieren der Mehrzahl von Bildern durch eine Mehrzahl von jeweiligen trainierten gefalteten neuronalen Netzwerkmodellen, wobei jedes der trainierten gefalteten neuronalen Netzwerkmodelle dem zumindest einen Ziel-Authentifizierungspunkt entspricht und für einen gegebenen Ziel-Authentifizierungspunkt mehr als ein trainiertes gefaltetes neuronales Netzwerkmodell benutzt wird, um ihn zu identifizieren;
**gekennzeichnet durch**
Erhalten einer Gesamtpunktzahl durch Ausführen eines gewichteten Summierungsprozesses auf Einzelpunkt-Punktzahlen der Mehrzahl von Ziel-Authentifizierungspunkten gemäß Gewichtungen, wobei das Gewicht für jedes gefaltete neuronale Netzwerkmodell gemäß der Identifikationsgenauigkeit des entsprechenden Ziel-Authentifizierungspunktes durch das gefaltete neuronale Netzwerkmodell während eines Trainings des gefalteten neuronalen Netzwerkmodells gesetzt wird; und
Authentifizieren der Authentizität des Gegenstands durch Vergleich der Einzelpunkt-Punktzahlen und der Gesamtpunktzahl mit einem ersten Schwellenwert und einem zweiten Schwellenwert; wobei das Gegenstandsauthentifizierungsverfahren ein Authentifizierungs-Fälschungsergebnis ausgibt, welches angibt, dass der Gegenstand gefälscht ist, wenn bestimmt wird, dass die Einzelpunkt-Punktzahlen kleiner als der erste Schwellenwert sind; und ein Authentifizierungs-Fälschungsergebnis ausgibt, das angibt, dass der Gegenstand gefälscht ist, wenn bestimmt wird, dass die Gesamtpunktzahl kleiner als der zweite Schwellenwert ist, wenn bestimmt wird, dass die Einzelpunkt-Punktzahlen größer als der erste Schwellenwert sind.

2. Das Gegenstandauthentifizierungsverfahren von Anspruch 1, das ferner einen Schritt aufweist, die Mehrzahl von Bildern vorzuverarbeiten, wobei der Schritt der Vorverarbeitung der Mehrzahl von Bildern aufweist, ein oder mehr auszuführen von: Größenmodifikation, Skalierung, Hinzufügung von Rauschen, Inversion, Rotation, Translation, Skalierungstransformation, Zuschneiden, Kontrasttransformation und zufälliger Kanaloffset an den Bildern.

3. Das Gegenstandauthentifizierungsverfahren von Anspruch 1, wobei die Mehrzahl der trainierten gefalteten neuronalen Netzwerkmodelle zumindest zwei Netzwerkmodelle eines VGG19-Netzwerkmodells, eines RESNET54-Netzwerkmodells und eines WRESNET16-Netzwerkmodells aufweisen.

4. Das Gegenstandauthentifizierungsverfahren von Anspruch 1, wobei der Schritt des Authentifizierens der Authentizität des Gegenstands gemäß den Einzelpunkt-Punktzahlen und der Gesamtpunktzahl aufweist:
Voreinstellen eines ersten Schwellenwerts, eines zweiten Schwellenwerts und eines Proportionalschwellenwerts;
Ausgeben eines Authentifizierungs-Fälschungsergebnisses, das angibt, dass der Gegenstand gefälscht ist, wenn bestimmt wird, dass eine Proportion der Einzelpunkt-Punktzahl, die kleiner als der erste Schwellenwert ist, größer als der Proportionalschwellenwert ist; und
Ausgeben eines Authentifizierungs-Fälschungsergebnisses, das angibt, dass der Gegenstand gefälscht ist, wenn bestimmt wird, dass die Gesamtpunktzahl kleiner als der zweite Schwellenwert ist, wenn bestimmt wird, dass die Proportion der Einzelpunkt-Punktzahl, die kleiner als der erste Schwellenwert ist, kleiner als der Proportionalschwellenwert ist.

5. Das Gegenstandauthentifizierungsverfahren von Anspruch 1, wobei der Gegenstand ein Luxusgegenstand ist.

6. Gegenstandauthentifizierungssystem, welches aufweist:
ein Vorverarbeitungsmodul, das konfiguriert ist zum Erfassen einer Mehrzahl von Bildern, die von einem zu authentisierenden Gegenstand aufgenommen sind, wobei jedes der Bilder zumindest einen Ziel-Authentifizierungspunkt enthält, wobei sich der Ziel-Authentifizierungspunkt auf ein Element des zu authentisierenden Gegenstands bezieht;
ein Identifikationsmodul, das konfiguriert ist zum Identifizieren der Mehrzahl von Bildern durch eine Mehrzahl von jeweiligen trainierten gefalteten neuronalen Netzwerkmodellen, wobei jedes der trainierten gefalteten neuronalen Netzwerkmodelle dem zumindest einen Ziel-Authentifizierungspunkt entspricht und für einen gegebenen Ziel-Authentifizierungspunkt mehr als ein trainiertes gefaltetes neuronales Netzwerkmodell benutzt wird, um ihn zu identifizieren; und
**gekennzeichnet durch**
ein Bewertungsmodul, das konfiguriert ist, um eine Gesamtpunktzahl durch Ausführen eines gewichteten Summierungsprozesses an Einzelpunkt-Punktzahlen der Mehrzahl von Ziel-Authentifizierungspunkten gemäß Gewichtungen zu erhalten; und um die Authentizität des Gegenstands durch Vergleich der Einzelpunkt-Punktzahlen und der Gesamtpunktzahl mit einem ersten Schwellenwert und einem zweiten Schwellenwert zu authentifizieren; wobei das Gegenstandsauthentifizierungssystem ein Authentifizierungs-Fälschungsergebnis ausgibt, das angibt, dass der Gegenstand gefälscht ist, wenn bestimmt wird, dass die Einzelpunkt-Punktzahlen kleiner als der erste Schwellenwert sind; und ein Authentifizierungs-Fälschungsergebnis ausgibt, das angibt, dass der Gegenstand gefälscht ist, wenn bestimmt wird, dass die Gesamtpunktzahl kleiner als der zweite Schwellenwert ist, wenn bestimmt wird, dass die Einzelpunkt-Punktzahlen größer als der erste Schwellenwert sind, wobei das Gewicht für jedes gefaltete neuronale Netzwerkmodell gemäß der zum Identifikationsgenauigkeit des entsprechenden Zielauthentifizierungspunkts durch das gefaltete neuronale Netzwerkmodell während des Trainings des gefalteten neuronalen Netzwerkmodells gesetzt wird.

7. Das Gegenstandauthentifizierungssystem von Anspruch 6, wobei das Vorverarbeitungsmodul ferner konfiguriert ist, um die Mehrzahl von Bildern vorzuverarbeiten, wobei das Vorverarbeitungsmodul ein oder mehr durchführt von: Größenmodifikation, Skalierung, Hinzufügung von Rauschen, Inversion, Rotation, Translation, Skalierungstransformation, Zuschneiden, Kontrasttransformation und zufälliger Kanaloffset an den Bildern.

8. Das Gegenstandauthentifizierungssystem von Anspruch 6, wobei die Mehrzahl der trainierten gefalteten neuronalen Netzwerkmodelle zumindest zwei Netzwerkmodelle eines VGG19-Netzwerkmodells, eines RESNET54-Netzwerkmodells und eines WRESNET16-Netzwerkmodells aufweisen.

9. Das Gegenstandauthentifizierungssystem von Anspruch 6, wobei das Bewertungsmodul konfiguriert ist, um die Schritte auszuführen:
Voreinstellen eines ersten Schwellenwerts, eines zweiten Schwellenwerts und eines Proportionalschwellenwerts;
Ausgeben eines Authentifizierungs-Fälschungsergebnisses, das angibt, dass der Gegenstand gefälscht ist, wenn bestimmt wird, dass eine Proportion der Einzelpunkt-Punktzahl, die kleiner als der erste Schwellenwert ist, größer als der Proportionalschwellenwert ist; und
Ausgeben eines Authentifizierungs-Fälschungsergebnisses, das angibt, dass der Gegenstand gefälscht ist, wenn bestimmt wird, dass die Gesamtpunktzahl kleiner als der zweite Schwellenwert ist, wenn bestimmt wird, dass die Proportion der Einzelpunkt-Punktzahl, die kleiner als der erste Schwellenwert ist, kleiner als der Proportionalschwellenwert ist.

10. Das Gegenstandauthentifizierungssystem von Anspruch 6, wobei der Gegenstand ein Luxusgegestand ist.

11. Gegenstandauthentifizierungsvorrichtung, welche aufweist:
einen Speicher, der konfiguriert ist, um Programmcodes zu speichern; und
einen oder mehrere Prozessoren;
wobei der Prozessor konfiguriert ist, um im Speicher gespeicherte Programmcodes aufzurufen, um das Gegenstandauthentifizierungsverfahren von einem der Ansprüche 1-5 auszuführen.

## Revendications

1. Procédé d'authentification d'article, comprenant les étapes suivantes :
l'acquisition d'une pluralité d'images prises sur un article à authentifier, chacune des images contient au moins un point d'authentification cible, dans lequel le point d'authentification cible fait référence à un élément de l'article à authentifier ;
l'acquisition d'au moins un score de point unique correspondant à chacun d'une pluralité de points d'authentification cibles par l'identification de la pluralité d'images par respectivement une pluralité de modèles de réseaux neuronaux convolutifs entraînés, chacun des modèles de réseaux neuronaux convolutifs entraînés correspond à l'au moins un point d'authentification cible et, pour un point d'authentification cible donné, plusieurs modèles de réseaux neuronaux convolutifs entraînés sont utilisés pour l'identifier ;
**caractérisé par**
l'obtention d'un score total par la réalisation d'un processus de somme pondérée sur des scores de point unique de la pluralité de points d'authentification cibles en fonction de poids, dans lequel le poids est défini pour chaque modèle de réseau neuronal convolutif en fonction de la précision d'identification du point d'authentification cible correspondant par le modèle de réseau neuronal convolutif pendant l'entraînement du modèle de réseau neuronal convolutif ; et
l'authentification de l'authenticité de l'article par la comparaison des scores de point unique et du score total à un premier seuil et un second seuil ; dans lequel le procédé d'authentification d'article délivre un résultat d'authentification de faux qui indique que l'article est faux lorsqu'il est déterminé que les scores de point unique sont inférieurs au premier seuil ; et délivre un résultat d'authentification de faux qui indique que l'article est faux lorsqu'il est déterminé que le score total est inférieur au second seuil s'il est déterminé que les scores de point unique sont supérieurs au premier seuil.

2. Procédé d'authentification d'article selon la revendication 1, comprenant en outre une étape de prétraitement de la pluralité d'images, dans lequel l'étape de prétraitement de la pluralité d'images comprend la réalisation d'un ou de plusieurs parmi une modification de taille, une mise à l'échelle, un ajout de bruit, une inversion, une rotation, une translation, une transformation de mise à l'échelle, un recadrage, une transformation de contraste et un décalage de canal aléatoire sur les images.

3. Procédé d'authentification d'article selon la revendication 1, dans lequel la pluralité de modèles de réseaux neuronaux convolutifs entraînés comprennent au moins deux modèles de réseaux parmi un modèle de réseau VGG19, un modèle de réseau RESNET54 et un modèle de réseau WRESNET16.

4. Procédé d'authentification d'article selon la revendication 1, dans lequel l'étape d'authentification de l'authenticité de l'article en fonction des scores de point unique et du score total comprend :
la prédéfinition d'un premier seuil, d'un second seuil et d'un seuil de proportion ;
la délivrance d'un résultat d'authentification de faux qui indique que l'article est faux lorsqu'il est déterminé qu'une proportion du score de point unique inférieur au premier seuil est supérieure au seuil de proportion ; et
la délivrance d'un résultat d'authentification de faux qui indique que l'article est faux lorsqu'il est déterminé que le score total est inférieur au second seuil s'il est déterminé que la proportion du score de point unique inférieur au premier seuil est inférieure au seuil de proportion.

5. Procédé d'authentification d'article selon la revendication 1, dans lequel l'article est un article de luxe.

6. Système d'authentification d'article, comprenant :
un module de prétraitement configuré pour acquérir une pluralité d'images prises sur un article à authentifier, chacune des images contient au moins un point d'authentification cible, dans lequel le point d'authentification cible fait référence à un élément de l'article à authentifier ;
un module d'identification configuré pour identifier la pluralité d'images par respectivement une pluralité de modèles de réseaux neuronaux convolutifs entraînés pour acquérir au moins un score de point unique correspondant à chacun d'une pluralité de points d'authentification cibles, chacun des modèles de réseaux neuronaux convolutifs entraînés correspond à l'au moins un point d'authentification cible et, pour un point d'authentification cible donné, plusieurs modèles de réseaux neuronaux convolutifs entraînés sont utilisés pour l'identifier ;
et **caractérisé par**
un module d'évaluation configuré pour obtenir un score total par la réalisation d'un processus de somme pondérée sur des scores de point unique de la pluralité de points d'authentification cibles en fonction de poids ; et authentifier l'authenticité de l'article par la comparaison des scores de point unique et du score total à un premier seuil et un second seuil ; dans lequel le système d'authentification d'article délivre un résultat d'authentification de faux qui indique que l'article est faux lorsqu'il est déterminé que les scores de point unique sont inférieurs au premier seuil ; et délivre un résultat d'authentification de faux qui indique que l'article est faux lorsqu'il est déterminé que le score total est inférieur au second seuil s'il est déterminé que les scores de point unique sont supérieurs au premier seuil, dans lequel le poids est défini pour chaque modèle de réseau neuronal convolutif en fonction de la précision d'identification du point d'authentification cible correspondant par le modèle de réseau neuronal convolutif pendant l'entraînement du modèle de réseau neuronal convolutif.

7. Système d'authentification d'article selon la revendication 6, dans lequel le module de prétraitement est en outre configuré pour prétraiter la pluralité d'images, dans lequel le module de prétraitement réalise un ou plusieurs parmi une modification de taille, une mise à l'échelle, un ajout de bruit, une inversion, une rotation, une translation, une transformation de mise à l'échelle, un recadrage, une transformation de contraste et un décalage de canal aléatoire sur les images.

8. Système d'authentification d'article selon la revendication 6, dans lequel la pluralité de modèles de réseaux neuronaux convolutifs entraînés comprennent au moins deux modèles de réseaux parmi un modèle de réseau VGG19, un modèle de réseau RESNET54 et un modèle de réseau WRESNET16.

9. Système d'authentification d'article selon la revendication 6, dans lequel le module d'évaluation est configuré pour réaliser les étapes suivantes :
la prédéfinition d'un premier seuil, d'un second seuil et d'un seuil de proportion ;
la délivrance d'un résultat d'authentification de faux qui indique que l'article est faux lorsqu'il est déterminé qu'une proportion du score de point unique inférieur au premier seuil est supérieure au seuil de proportion ; et
la délivrance d'un résultat d'authentification de faux qui indique que l'article est faux lorsqu'il est déterminé que le score total est inférieur au second seuil s'il est déterminé que la proportion du score de point unique inférieur au premier seuil est inférieure au seuil de proportion.

10. Système d'authentification d'article selon la revendication 6, dans lequel l'article est un article de luxe.

11. Dispositif d'authentification d'article, comprenant :
une mémoire configurée pour stocker des codes de programme ; et
un ou plusieurs processeurs ;
dans lequel le processeur est configuré pour invoquer les codes de programme stockés dans la mémoire pour exécuter le procédé d'authentification d'article selon l'une quelconque des revendications 1 à 5.
